# EUROPÄISCHE PATENTSCHRIFT

(11) **EP 3 719 336 B1**
(45) Veröffentlichungstag und Bekanntmachung des Hinweises auf die Patenterteilung: **15.09.2021**
(21) Anmeldenummer: 19166676.7
(22) Anmeldetag: 02.04.2019
(51) Int. Cl.: F16D 3/84, F16D 1/08, F16D 1/094, F16C 35/02, F16C 17/02

(54) **GELENKWELLE MIT GELENKWELLENSCHUTZ**
ARTICULATED SHAFT WITH PROTECTION FOR THE ARTICULATED SHAFT
ARBRE ARTICULÉ AVEC PROTECTION D'ARBRE ARTICULÉ

(43) Veröffentlichungstag der Anmeldung: 07.10.2020
(73) Patentinhaber: Walterscheid GmbH, 53797 Lohmar (DE)
(72) Erfinder: HÖCK, Andreas, 53797 Lohmar (DE); HECTOR, Martin, 53721 Siegburg (DE); LITTAU, Matthias, 53347 Alfter (DE)
(74) Vertreter: Neumann Müller Oberwalleney & Partner Patentanwälte

(56) Entgegenhaltungen:
- EP-A2- 3 130 813
- DE-A1- 2 803 822
- DE-C- 305 031
- DE-C- 851 865
- GB-A- 1 318 314
- GB-A- 2 051 998

## Beschreibung

Die Erfindung betrifft eine Gelenkwelle mit Gelenkwellenschutz, wobei die Gelenkwelle zumindest ein Wellenteil zur Übertragung von Drehmoment, zumindest ein Schutzrohrteil, das um das Wellenteil angeordnet ist, und ein Zwischenlager, mittels dessen das Wellenteil im Schutzrohrteil um eine Drehachse drehbar gelagert ist, aufweist. Das Zwischenlager weist einen Außenring, der am Schutzrohrteil festgelegt ist, und einen Innenring, der am Wellenteil festgelegt ist, auf. Der Außenring und der Innenring sind relativ zueinander drehbar.

Eine solche Gelenkwelle ist aus der GB 1 318 314 A bekannt, welche ein Zwischenlager in Form eines Kugellagers mit einem Außenring und einem Innenring zeigt, zwischen denen Kugeln angeordnet sind. Der Außenring ist am Schutzrohrteil und der Innenring am Wellenteil festgelegt.

GB 2 051 998 A offenbart eine ähnliche Gelenkwelle, bei dem das Zwischenlager einen Außenring, der am Schutzrohrteil befestigt ist, und einen Innenring, der am Wellenteil festgelegt ist, aufweist. Der Außenring und der Innenring des Zwischenlagers sind relativ zueinander drehbar.

Aus der DE 29 08 029 C3 ist eine weitere Gelenkwelle bekannt. Der Außenring ist in ein offenes Ende des Schutzrohrteils eingesteckt und mit diesem fest verbunden. Der Innenring ist auf dem Wellenteil aufgesetzt und mit diesem verschweißt. Der Außenring weist einen nach radial innen weisenden Kragen auf, der in eine Umfangsnut des Innenrings eintaucht.

Ähnlich aufgebaut ist eine Gelenkwelle, die in der DE 28 03 822 A1 beschrieben ist. Aufgabe der vorliegenden Erfindung ist es, eine Gelenkwelle mit Schutzrohrteil bereitzustellen, das ein einfach aufgebautes Zwischenlager zum Lagern des Schutzrohrteils auf einem Wellenteil aufweist.

Die Aufgabe wird durch eine Gelenkwelle mit Gelenkwellenschutz gelöst, wobei die Gelenkwelle zumindest ein Wellenteil zur Übertragung von Drehmoment, zumindest ein Schutzrohrteil, das um das Wellenteil angeordnet ist, und ein Zwischenlager, mittels dessen das Wellenteil im Schutzrohrteil um eine Drehachse drehbar gelagert ist, aufweist. Das Zwischenlager weist einen Außenring, der am Schutzrohrteil festgelegt ist, und einen Innenring, der am Wellenteil festgelegt ist, auf. Der Außenring und der Innenring sind relativ zueinander drehbar. Ferner weist die Gelenkwelle einen Klemmmechanismus auf, über den der Innenring auf dem Wellenteil fixiert ist, wobei der Klemmmechanismus einen Klemmring aufweist, der drehfest mit dem Innenring verbunden ist und der auf das Wellenteil geklemmt ist.

Der Klemmmechanismus ermöglicht eine einfache Montage des Zwischenlagers auf dem Wellenteil. Es ist kein aufwendiges Montageverfahren, wie zum Beispiel eine Schweißung, Verklebung oder Verschraubung notwendig. Das Wellenteil hat über einen wesentlichen Abschnitt in Längsrichtung ein konstantes Querschnittsprofil. Durch die Verwendung eines Klemmmechanismus ist es daher möglich, den Innenring an einer beliebigen Position in axialer Richtung auf dem Wellenteil zu montieren. Ferner ist es möglich, die Position des Innenrings durch erneutes Lösen des Klemmmechanismus und erneutes Verklemmen auf dem Wellenteil nachträglich zu ändern bzw. zu korrigieren.

Der Innenring kann zur drehfesten Verbindung mit dem Klemmring auf diesen geklemmt sein, zum Beispiel durch Aufpressen des Innenrings auf den Klemmring. Somit wird auf einfache Art und Weise eine feste Verbindung zwischen dem Innenring und dem Klemmring ermöglicht.

In einer Ausgestaltung kann der Klemmring an einem ersten axialen Ende einen radial vorstehenden ersten Vorsprung aufweisen, gegen den der Innenring in einer ersten axialen Richtung abstützbar ist. Der erste Vorsprung kann als umlaufender Kragen gebildet sein. Es ist auch denkbar, dass der Kragen nicht vollständig über den Umfang verläuft. Ferner können auch mehrere erste Vorsprünge vorgesehen sein, die über den Umfang verteilt angeordnet sind. Der erste Vorsprung dient als Anschlag während des Aufpressen des Innenrings auf den Klemmring, um eine definierte Begrenzung des Weges des Innenrings beim Aufpressen auf den Klemmring in der ersten axialen Richtung (Montagerichtung) zu definieren.

Der Klemmring kann an einem zweiten axialen Ende einen radial vorstehenden zweiten Vorsprung aufweisen, gegen den der Innenring in einer zweiten axialen Richtung (Demontagerichtung) abstützbar ist. Der Innenring wird zum Beispiel ausgehend von dem zweiten axialen Ende auf den Klemmring aufgeschoben und passiert hierbei den zweiten Vorsprung. Dabei kann vorgesehen sein, dass der zweite Vorsprung nicht vollständig über den Umfang verläuft. Hierdurch wird ermöglicht, dass sich der Klemmring partiell im Bereich des zweiten Vorsprungs elastisch nach radial innen verformt, bis der Innenring den zweiten Vorsprung vollständig passiert hat. Nach dem vollständigen Passieren des zweiten Vorsprungs springt dieser radial nach außen in seine ursprüngliche Position zurück und setzt sich axial hinter den Innenring, so dass dieser sich axial gegen den zweiten Vorsprung in der zweiten axialen Richtung abstützen kann. Es ist auch möglich, dass mehrere zweite Vorsprünge vorgesehen sein, die über den Umfang verteilt angeordnet sind.

Der zweite Vorsprung kann an einer radial federnden Lasche des Klemmrings angeordnet sein, um das Verformen des Klemmrings im Bereich des zweiten Vorsprungs radial nach innen zu erleichtern. Wenn mehrere zweite Vorsprünge vorgesehen sind, kann der Klemmring entsprechend je zweitem Vorsprung eine separate Lasche aufweisen.

Der Klemmring kann in einer beispielhaften Ausführungsform über den Umfang in mehrere Klemmringteile geteilt ausgebildet sein. Zum Beispiel kann der Klemmring in zwei Klemmringteile in Form von Halbschalen geteilt sein. Diese können an einer Stelle über ein Filmscharnier miteinander verbunden sein, so dass der Klemmring quer zur Drehachse der Gelenkwelle aufgeklappt werden kann. Die einzelnen Klemmringteile können sich somit radial zueinander bewegen, so dass diese mittels des Innenrings auf den Wellenteil geklemmt werden können, ohne dass der Klemmring elastisch zu sehr beansprucht wird. Das radiale Klemmen wird im Wesentlichen durch die Schwenkbewegung der einzelnen Klemmringteile zueinander ermöglicht.

Bei einer weiteren Ausführungsform weist der Klemmring zwei Klemmringteile auf, die von entgegengesetzten Seiten axial in den Innenring eingesteckt sind. Die Klemmringteile weisen jeweils, bezogen auf die Drehachse, in einem Längsschnitt betrachtet zumindest einen keilförmigen Abschnitt auf, der sich in Richtung zum gegenüberliegenden Klemmringteil verjüngt. Die beiden Klemmringteile sind derart ineinandergesteckt, dass die keilförmigen Abschnitte der beiden Klemmringteile einander überlappend angeordnet sind. Somit wird durch einfaches Einstecken der beiden Klemmringteile in den Innenring ein Verklemmen erzielt.

Die keilförmigen Abschnitte der Klemmringteile können beispielsweise durch Laschen gebildet sein, die von einem Basisring in Richtung zum gegenüberliegenden Klemmringteil axial vorstehen.

In einer speziellen Ausgestaltung kann vorgesehen sein, dass die Laschen zumindest eines überlappend angeordneten Paars von Laschen jeweils eine zur jeweilig anderen Lasche radial vorstehende Rippe aufweisen. Die Rippe bewirkt eine Aussteifung der jeweiligen Lasche. Ferner können die beiden Klemmringteile nicht gegeneinander verdreht werden, so dass eine genaue Winkelposition der beiden Klemmringteile zueinander eingehalten wird.

In einer weiteren Ausführungsform kann der Klemmring durch Umspritzen des Innenrings gebildet sein. Durch das Umspritzen mit Kunststoff wird somit der Klemmring geformt und gleichzeitig mit dem Innenring sicher verbunden.

Bei allen Ausführungsformen kann einer der Ringe, nämlich Außenring oder Innenring, aus Kunststoff und der andere dieser Ringe aus Metall hergestellt sein. Somit wird eine für die Reibungsverhältnisse günstige Kunststoff/Metall-Paarung gewährleistet.

Bevorzugte beispielhafte Ausgestaltungen werden im Folgenden anhand der Figuren näher erläutert. Hierin zeigen
- Figur 1: eine perspektivische Darstellung einer Gelenkwelle mit Gelenkwellenschutz,
- Figur 2: eine perspektivische Darstellung eines Schutzrohrteils, das über ein Zwischenlager einer ersten Ausführungsform auf einem Wellenteil einer Gelenkwelle gelagert ist,
- Figur 3: eine perspektivische Darstellung nach Figur 2, wobei das Schutzrohrteil nicht dargestellt ist,
- Figur 4: eine perspektivische Darstellung eines aufgeklappten Klemmrings des Zwischenlagers gemäß der Figuren 2 und 3,
- Figur 5: eine Frontansicht des aufgeklappten Klemmrings gemäß Figur 3,
- Figur 6: einen Längsschnitt des Wellenteils mit Schutzrohrteil und Zwischenlager entlang der Schnittlinie VI-VI gemäß Figur 2,
- Figur 7: einen Längsschnitt des Wellenteils mit Schutzrohrteil und Zwischenlager entlang der Schnittlinie VII-VII gemäß Figur 2,
- Figur 8: eine perspektivische Darstellung einer zweiten Ausführungsform eines Zwischenlagers,
- Figur 9: einen Längsschnitt entlang der Schnittlinie IX-IX gemäß Figur 8, und
- Figur 10: eine perspektivische Darstellung eines Innenrings und eines Klemmrings einer dritten Ausführungsform eines Zwischenlagers.

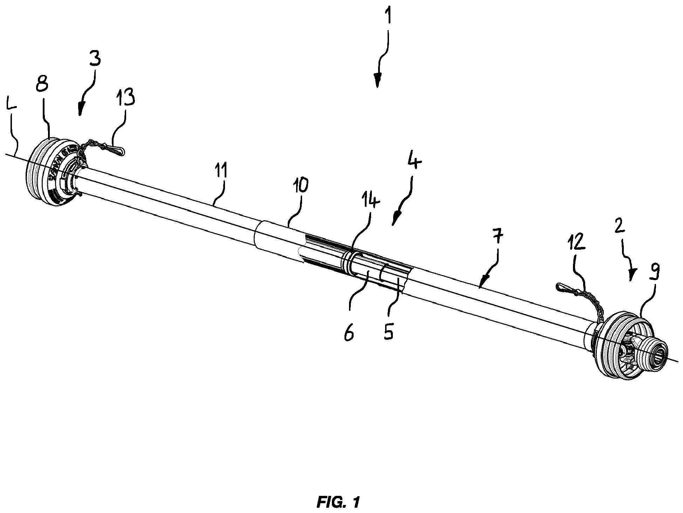

Figur 1 zeigt eine perspektivische Darstellung einer Gelenkwelle 1 mit einem ersten Gelenk 2 und einem zweiten Gelenk 3, die über eine längenveränderliche Welle 4 miteinander verbunden sind. Das erste Gelenk 2 und das zweite Gelenk 3 sind jeweils als Kreuzgelenk ausgestaltet. Die Welle 4 umfasst ein Innenrohr 5, das mit dem ersten Gelenk 2 verbunden ist, und ein Außenrohr 6, das mit dem zweiten Gelenk 3 verbunden ist. Das Innenrohr 5 ist axial entlang einer Längsachse L der Gelenkwelle 1 verschiebbar in dem Außenrohr 6 aufgenommen. Um bei einer Drehung der Gelenkwelle 1 um die Längsachse L (die gleichzeitig Drehachse ist) eine Drehmomentmitnahme zwischen dem Innenrohr 5 und dem Außenrohr 6 zu erzielen, weisen das Innenrohr 5 und das Außenrohr 6 jeweils ein von einem Kreisquerschnitt abweichendes Querschnittsprofil auf. Im vorliegenden Fall weisen das Innenrohr 5 und das Außenrohr 6 ein sogenanntes Zitronen-Profil auf.

Zum Schutz des Bedienpersonals gegen drehende Bauteile weist die Gelenkwelle 1 einen Gelenkwellenschutz 7 auf. Dieser umfasst einen ersten Schutztrichter 8 um das erste Gelenk 2 und einen zweiten Schutztrichter 9 um das zweite Gelenk 3 auf. Der erste Schutztrichter 8 ist mit einem äußeren Schutzrohr 10 verbunden, in das ein inneres Schutzrohr 11 axial entlang der Längsachse L verschiebbar aufgenommen ist, wobei das innere Schutzrohr 11 mit dem zweiten Schutztrichter 9 verbunden ist. Das äußere Schutzrohr 10 und das innere Schutzrohr 11 weisen jeweils einen kreisrunden Querschnitt auf. Um sicherzustellen, dass der Gelenkwellenschutz 7 nicht mit den Gelenken 2, 3 und der Welle 4 mit dreht, ist an dem ersten Schutztrichter 8 eine erste Sicherungskette 12 und an dem zweiten Schutztrichter 9 eine zweite Sicherungskette 13 befestigt. Beide Sicherungsketten 12, 13 können mit ortsfesten Bauteilen verbunden werden, sodass hierüber eine Abstützung des ersten Schutztrichters 8 und des zweiten Schutztrichters 9 in Rotationsrichtung gegeben ist.

Bei langen Gelenkwellen 1 ist es erforderlich, den Gelenkwellenschutz 7 gegenüber der Welle 4 zu lagern. Hierzu dient ein Zwischenlager 14, das zwischen dem inneren Schutzrohr 11 und dem Außenrohr 6 der Welle 4 angeordnet ist. Verschiedene Ausführungen des Zwischenlagers 14 werden anhand der folgenden Figuren näher erläutert.

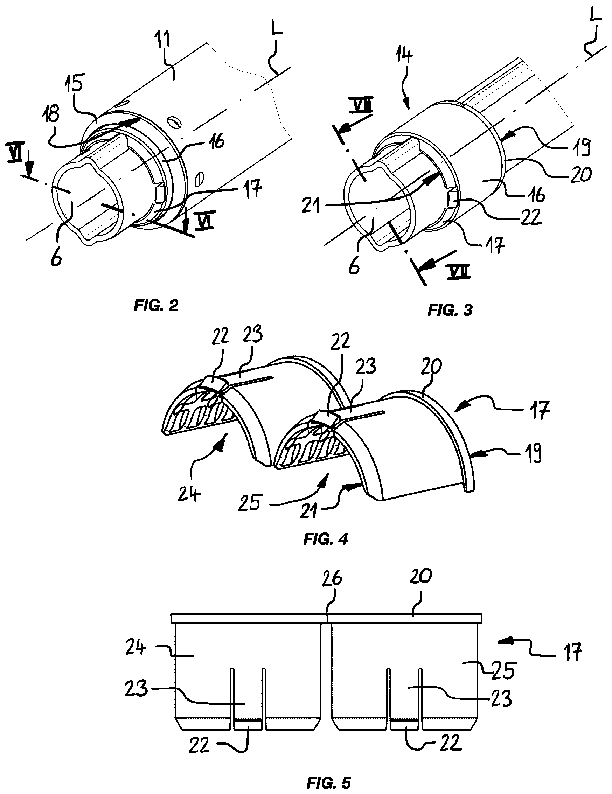

Die Figuren 2 und 3 zeigt eine perspektivische Darstellung des Zwischenlagers 14 auf dem Außenrohr 6 der Welle 4 mit innerem Schutzrohr 11 (Figur 2) und ohne inneres Schutzrohr 11 (Figur 3).

Das Außenrohr 6 stellt ein Wellenteil zur Übertragung von Drehmoment zwischen dem ersten Gelenk 2 und dem zweiten Gelenk 3 über die Welle 4 dar. Das innere Schutzrohr 11 stellt ein Schutzrohrteil des Gelenkwellenschutzes dar, das um das Wellenteil in Form des Außenrohrs 6 der Welle 4 angeordnet ist. Zwischen dem inneren Schutzrohr 11 und dem Außenrohr 6 ist das Zwischenlager 14 angeordnet. Mittels des Zwischenlagers 14 ist das Außenrohr 6 der Welle 4 innerhalb des inneren Schutzrohres 11 um die Längsachse L, die gleichzeitig Drehachse ist, drehbar gelagert. Das Zwischenlager 14 weist einen Außenring 15 auf, der an einem offenen Ende des inneren Schutzrohrs 11 befestigt ist.

Alternativ kann der Außenring 15 auch an einer anderen Stelle innerhalb des inneren Schutzrohres 11 angeordnet sein.

Das Zwischenlager 14 weist ferner einen Klemmmechanismus auf, der in dem gezeigten Ausführungsbeispiel einen Klemmring 17 umfasst. Die Figuren 4 und 5 zeigen den Klemmring 17 in unterschiedlichen perspektivischen Darstellungen.

Über den Klemmmechanismus ist der Innenring 16 auf dem Außenrohr 6 fixiert. Hierbei kann der Klemmring 17 des Klemmmechanismus an einer beliebigen Stelle in axialer Richtung entlang der Längsachse L betrachtet auf dem Außenrohr 6 befestigt sein. Somit kann auch der Innenring 16 an einer beliebigen Stelle in axialer Richtung auf dem Außenrohr 6 fixiert werden.

Der Klemmring 17 ist drehfest mit dem Innenring 16 verbunden und drehfest auf das Außenrohr 6 geklemmt. Das Außenrohr 6 weist, ebenso wie das Innenrohr 5, ein Querschnittsprofil auf, dass von einem Kreis abweicht. In dem gezeigten Ausführungsbeispiel sind das Innenrohr 5 und das Außenrohr 6 als Zitronenprofilrohre ausgebildet, die drehfest und teleskopierbar ineinander gesteckt sind, sodass zwischen ihnen Drehmoment übertragen werden kann. Der Klemmring 17 ist bezogen auf seine Innenumfangsfläche an das Außenprofil des Außenrohrs 6 angepasst und somit drehfest auf diesem gehalten. Der Innenring 16 ist in einer Montagerichtung M auf den Klemmring 17 mit Presspassung aufgepresst. Durch die Presspassung sitzt der Innenring 16 drehfest auf den Klemmring 17.

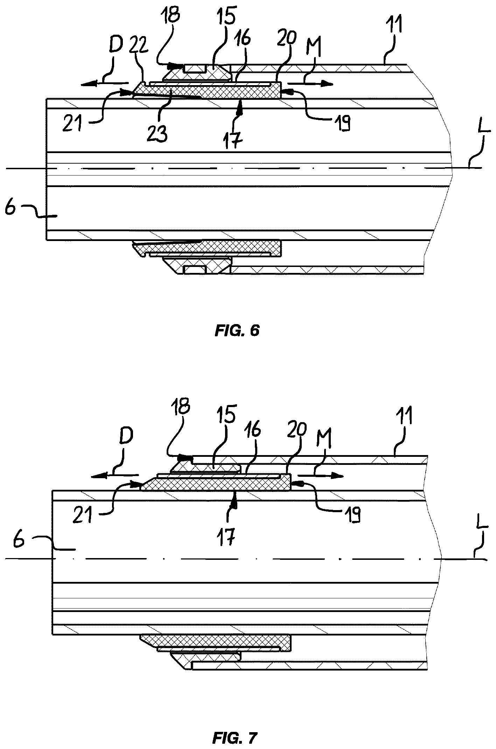

Der Klemmring 17 weist an einem ersten axialen Ende 19 einen radial vorstehenden ersten Vorsprung 20 auf, der auch in den Figuren 6 und 7 erkennbar ist, wobei die Figuren 6 und 7 unterschiedliche Längsschnitte durch die Anordnung aus innerem Schutzrohr 11, Zwischenlager 15 und Außenrohr 6 der Welle 4 zeigen.

Der Innenring 16 ist gegen den ersten Vorsprung 20 in einer ersten axialen Richtung (Montagerichtung M) abstützbar. In dem gezeigten Ausführungsbeispiel ist der erste Vorsprung 20 als umlaufender Kragen ausgebildet. Beim Aufpressen des Innenrings 16 auf den Klemmring 17 dient der erste Vorsprung 20 als Anschlag zur Begrenzung des Montageweges des Innenrings 16 in Montagerichtung M. Alternativ können auch mehrere erste Vorsprünge 20 über den Umfang angeordnet sein.

Der Klemmring 17 weist ferner an einem zweiten axialen Ende 21 zwei radial vorstehende zweite Vorsprünge 22 auf. Der Innenring 16 ist gegen die zweiten Vorsprünge 22 in einer zweiten axialen Richtung (Demontagerichtung D) abstützbar. Alternativ kann auch nur ein zweiter Vorsprung 22 oder mehr als zwei zweite Vorsprünge 22 vorgesehen sein. Die zweiten Vorsprünge 22 dienen dazu, dass der Innenring 16 nicht unbeabsichtigt in Demontagerichtung vom Klemmring 17 abgezogen werden kann.

In dem gezeigten Ausführungsbeispiel weist der Klemmring 17 zwei radial federnde Laschen 23 auf, an denen jeweils einer der zweiten Vorsprünge 22 angeformt ist. Für eine Demontage des Innenrings 16 müssen zunächst die federnden Laschen 23 radial nach innen gedrückt werden, sodass der Innenring 16 über die beiden zweiten Vorsprünge 22 in Demontagerichtung D gezogen werden kann.

In einer beispielhaften Ausführungsform ist der Klemmring 17 über den Umfang betrachtet geteilt ausgebildet. Dies ist insbesondere in den Figuren 4 und 5 erkennbar. Der Klemmring 17 ist in zwei Klemmringteile, nämlich ein erstes Klemmringteil 24 und ein zweites Klemmringteil 25, geteilt ausgebildet. Die beiden Klemmringteile 24, 25 sind halbschalenförmig gestaltet. An einer Umfangsstelle sind die beiden Klemmringteile 24, 25 über ein Filmscharnier 26 scharnierbar miteinander verbunden. Somit können die Klemmringteile 24, 25 um eine Scharnierachse des Filmscharniers 26 parallel zur Längsachse L geklappt werden. Dies erleichtert die Montage auf das Außenrohr 6, da der Klemmring 17 seitlich auf das Außenrohr 6 aufgesetzt werden kann und danach die Klemmringteile 24, 25 geschlossen werden können.

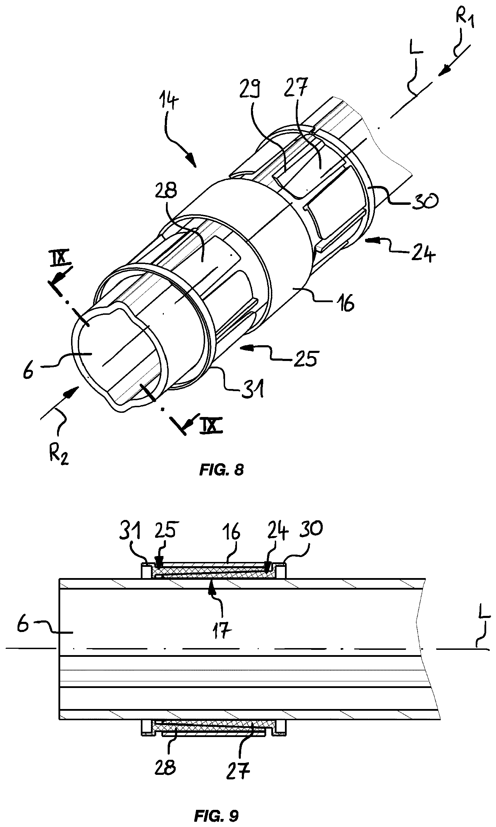

Figur 8 zeigt eine perspektivische Darstellung einer zweiten Ausführungsform eines Zwischenlagers 14 auf dem Außenrohr 6 der Welle 4. Figur 9 zeigt einen Längsschnitt durch die zweite Ausführungsform des Zwischenlagers 14 und des Außenrohrs 6 entlang der Schnittlinie IX-IX gemäß Figur 8. Die Figuren 8 und 9 werden im Folgenden zusammen beschrieben, wobei Bauteile, die den Bauteilen der ersten Ausführungsform des Zwischenlagers gemäß der Figuren 2 bis 7 entsprechen, mit denselben Bezugszeichen versehen sind.

Der Klemmring 17 der zweiten Ausführungsform des Zwischenlagers 14 weist ein erstes Klemmringteil 24 und ein zweites Klemmringteil 25 auf, die von entgegengesetzten Seiten axial in den Innenring 16 eingesteckt sind. Das erste Klemmringteil 24 ist in einer ersten Richtung R1 in den Innenring 16 eingesteckt. Das zweite Klemmringteil 25 ist in einer zweiten Richtung R2 in den Innenring 16 eingesteckt. Die zweite Richtung R2 ist entgegengesetzt zur ersten Richtung R1 ausgerichtet, wobei die erste Richtung R1 und die zweite Richtung R2 parallel zur Längsachse L angeordnet sind.

Das erste Klemmringteil 24 weist einen umlaufenden Basisring 30 auf, von dem mehrere über den Umfang verteilte Laschen 27 in Richtung der ersten Richtung R1 vorstehen. Das zweite Klemmringteil 25 weist ebenfalls einen umlaufenden Basisring 31 auf, von dem mehrere über den Umfang verteilte Laschen 28 in Richtung der zweiten Richtung R2 vorstehen. Die Laschen 27, 28 sind jeweils im Längsschnitt betrachtet (Figur 9) keilförmig gestaltet und bilden keilförmige Abschnitte, die sich jeweils in Richtung zum gegenüberliegenden Klemmringteil verjüngen. Die Laschen 27, 28 sind derart angeordnet, dass sich jeweils zwei Laschen paarweise überlappen und in radialer Richtung betrachtet übereinander angeordnet sind. Somit wird durch Ineinanderstecken der beiden Klemmringteile 24, 25 ein Verklemmen des Innenrings 16 auf dem Klemmring 17 erzielt.

Zur einfachen Montage der beiden Klemmringteile 24, 25 können die Basisringe 30, 31 jeweils über den Umfang geteilt sein, wie dies beim ersten Klemmringteil 24 in Figur 8 ersichtlich ist. Der erste Klemmringteil 24 lässt sich somit aufweiten und radial zur Längsachse L auf das Außenrohr 6 aufbringen. Hierzu können die Klemmringteile 24, 25 auch in Halbschalen geteilt sein, die zum Beispiel über ein Filmscharnier um eine parallel zur Längsachse angeordnete Scharnierachse scharnierbar miteinander verbunden sind.

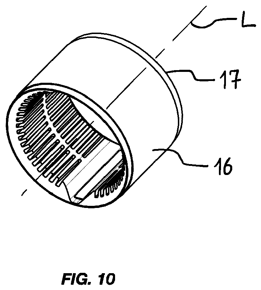

Figur 10 zeigt einen Klemmring 17 an einem Innenring 16 einer dritten Ausführungsform eines Zwischenlagers in perspektivischer Darstellung. Bei dieser Ausführungsform wird der Klemmring 17 durch teilweises Umspritzen des Innenrings 16 an dessen Innenseite gebildet. Durch das Umspritzen mit Kunststoff zur Herstellung des Klemmrings 17 ist der Klemmring 17 sicher mit dem Innenring 16 verbunden.

### Bezugszeichenliste

- 1: Gelenkwelle
- 2: erstes Gelenk
- 3: zweites Gelenk
- 4: Welle
- 5: Innenrohr
- 6: Außenrohr
- 7: Gelenkwellenschutz
- 8: erster Schutztrichter
- 9: zweiter Schutztrichter
- 10: äußeres Schutzrohr
- 11: inneres Schutzrohr
- 12: erste Sicherungskette
- 13: zweite Sicherungskette
- 14: Zwischenlager
- 15: Außenring
- 16: Innenring
- 17: Klemmring
- 18: offenes Ende des inneren Schutzrohrs
- 19: erstes axiales Ende
- 20: erster Vorsprung
- 21: zweites axiales Ende
- 22: zweite Vorsprung
- 23: Lasche
- 24: erstes Klemmringteil
- 25: zweites Klemmringteil
- 26: Filmscharnier
- 27: Lasche
- 28: Lasche
- 29: Rippe
- 30: Basisring
- 31: Basisring

- D: Demontagerichtung
- L: Längsachse
- M: Montagerichtung
- R1: erste Richtung
- R2: zweite Richtung

## Patentansprüche

1. Gelenkwelle (1) mit Gelenkwellenschutz (7), wobei die Gelenkwelle (1) Folgendes aufweist:
zumindest ein Wellenteil (6) zur Übertragung von Drehmoment,
zumindest ein Schutzrohrteil (11), das um das Wellenteil (6) angeordnet ist, und
ein Zwischenlager (14), mittels dessen das Wellenteil (6) im Schutzrohrteil (11) um eine Drehachse (L) drehbar gelagert ist,
wobei das Zwischenlager (14) einen Außenring (15), der am Schutzrohrteil (11) festgelegt ist, und einen Innenring (16), der am Wellenteil (6) festgelegt ist, aufweist, die relativ zueinander drehbar sind,
**dadurch gekennzeichnet,**
**dass** die Gelenkwelle (7) ferner einen Klemmmechanismus (17, 27, 28, 32) aufweist, über den der Innenring (16) auf dem Wellenteil (6) fixiert ist, wobei der Klemmmechanismus einen Klemmring (17) aufweist, der drehfest mit dem Innenring (16) verbunden ist und der auf das Wellenteil (6) geklemmt ist.

2. Gelenkwelle (1) nach Anspruch 1,
**dadurch gekennzeichnet,**
**dass** der Innenring (16) zur drehfesten Verbindung mit dem Klemmring (17) auf den Klemmring (17) geklemmt ist, insbesondere aufgepresst ist.

3. Gelenkwelle (1) nach Anspruch 2,
**dadurch gekennzeichnet,**
**dass** der Klemmring (17) an einem ersten axialen Ende (19) einen radial vorstehenden ersten Vorsprung (20) aufweist, gegen den der Innenring (16) in einer ersten axialen Richtung (M) abstützbar ist.

4. Gelenkwelle (1) nach Anspruch 3,
**dadurch gekennzeichnet,**
**dass** der Klemmring (17) an einem zweiten axialen Ende (21) einen radial vorstehenden zweiten Vorsprung (22) aufweist, gegen den der Innenring (16) in einer zweiten axialen Richtung (D) abstützbar ist.

5. Gelenkwelle (1) nach Anspruch 4,
**dadurch gekennzeichnet,**
**dass** der zweite Vorsprung (22) an einer radial federnden Lasche (23) des Klemmrings (17) angeordnet ist.

6. Gelenkwelle (1) nach einem der Ansprüche 1 bis 5,
**dadurch gekennzeichnet,**
**dass** der Klemmring (17) über den Umfang geteilt ausgebildet ist.

7. Gelenkwelle (1) nach einem der Ansprüche 1 bis 6,
**dadurch gekennzeichnet,**
**dass** der Klemmring (17) zwei Klemmringteile (24, 25) aufweist, die von entgegengesetzten Seiten in den Innenring (16) eingesteckt sind,
**dass** die Klemmringteile (24, 25) jeweils, bezogen auf die Drehachse (L), in einem Längsschnitt betrachtet zumindest einen keilförmigen Abschnitt (27, 28) aufweisen, der sich in Richtung zum gegenüberliegenden Klemmringteil (24, 25) verjüngt, und
**dass** die beiden Klemmringteile (24, 25) derart ineinandergesteckt sind, dass die keilförmigen Abschnitte (27, 28) der beiden Klemmringteile (24, 25) einander überlappend angeordnet sind.

8. Gelenkwelle (1) nach Anspruch 7,
**dadurch gekennzeichnet,**
**dass** die keilförmigen Abschnitte der Klemmringteile (24, 25) durch Laschen (27, 28) gebildet sind, die von einem Basisring (30, 31) in Richtung zum gegenüberliegenden Klemmringteil (24, 25) axial vorstehen.

9. Gelenkwelle (1) nach Anspruch 1,
**dadurch gekennzeichnet,**
**dass** der Klemmring (17) durch Umspritzen des Innenrings (16) gebildet ist.

## Claims

1. Universal joint shaft (1) with universal joint shaft protection (7), wherein the universal joint shaft (1) comprises the following:
at least one shaft element (6) for transmitting torque,
at least one protective tube element (11) arranged around the shaft element (6), and
an intermediate bearing (14), by means of which the shaft element (6) is rotatably mounted about an axis of rotation (L) in the protective tube element (11),
wherein the intermediate bearing (14) comprises an outer ring (15) fixed to the protective tube element (11) and an inner ring (16) fixed to the shaft element (6), which are rotatable relative to each other,
**characterized in**
**that** the universal joint shaft (7) further comprises a clamping mechanism (17, 27, 28, 32) by means of which the inner ring (16) is fixed on the shaft element (6), wherein the clamping mechanism comprises a clamping ring (17), which is connected rotationally fixed to the inner ring (16) and which is clamped onto the shaft element (6).

2. Universal joint shaft (1) according to claim 1,
**characterized in**
**that** the inner ring (16) is clamped onto the clamping ring (17) for a rotationally fixed connection to the clamping ring (17), particularly the inner ring is pressed onto it.

3. Universal joint shaft (1) according to claim 2,
**characterized in**
**that** the clamping ring (17) comprises a radially protruding first projection (20) at a first axial end (19), against which the inner ring (16) is supportable in a first axial direction (M).

4. Universal joint shaft (1) according to claim 3,
**characterized in**
**that** the clamping ring (17) comprises a radially protruding second projection (22) at a second axial end (21), against which the inner ring (16) is supportable in a second axial direction (D).

5. Universal joint shaft (1) according to claim 4,
**characterized in**
**that** the second projection (22) is arranged on a radially elastic lug (23) of the clamping ring (17).

6. Universal joint shaft (1) according to one of claims 1 to 5,
**characterized in**
**that** the clamping ring (17) is formed divided over the circumference.

7. Universal joint shaft (1) according to one of claims 1 to 6,
**characterized in**
**that** the clamping ring (17) comprises two clamping ring elements (24, 25) which are inserted into the inner ring (16) from opposite sides,
**that** the clamping ring elements (24, 25) each have at least one wedge-shaped portion (27, 28), viewed in a longitudinal section relative to the axis of rotation (L), which tapers in the direction of the opposite clamping ring element (24, 25), and
**that** the two clamping ring elements (24, 25) are inserted into one another in such a way that the wedge-shaped portions (27, 28) of the two clamping ring elements (24, 25) are arranged overlapping one another.

8. Universal joint shaft (1) according to claim 7,
**characterized in**
**that** the wedge-shaped portions of the clamping ring elements (24, 25) are formed by lugs (27, 28) which project axially from a base ring (30, 31) in the direction of the opposite clamping ring element (24, 25).

9. Universal joint shaft (1) according to claim 1,
**characterized in**
**that** the clamping ring (17) is formed by overmoulding the inner ring (16).

## Revendications

1. Arbre articulé (1) doté d'une protection d'arbre articulé (7), l'arbre articulé (1) comportant ce qui suit :
au moins une partie d'arbre (6), destinée à transmettre un couple de rotation,
au moins une partie formant tube protecteur (11), qui est placée autour de la partie d'arbre (6), et
un palier intermédiaire (14), au moyen duquel la partie d'arbre (6) est logée de manière rotative autour d'un axe de rotation (L) dans la partie formant tube protecteur (11),
le palier intermédiaire (14) comportant une bague externe (15), qui est immobilisée sur la partie formant tube protecteur (11), et une bague interne (16), qui est immobilisée sur la partie d'arbre (6), qui sont rotatives l'une par rapport à l'autre,
**caractérisé en ce que**
l'arbre articulé (7) comporte par ailleurs un mécanisme de serrage (17, 27, 28, 32), par l'intermédiaire duquel la bague interne (16) est fixée sur la partie d'arbre (6), le mécanisme de serrage comportant une bague de serrage (17), qui est assemblée de manière solidaire en rotation avec la bague interne (16) et qui est serrée sur la partie d'arbre (6).

2. Arbre articulé (1) selon la revendication 1, **caractérisé en ce que**
pour l'assemblage solidaire en rotation avec la bague de serrage (17), la bague interne (16) est serrée, notamment sertie sur la bague de serrage (17).

3. Arbre articulé (1) selon la revendication 2, **caractérisé en ce que**
sur une première extrémité (19) axiale, la bague de serrage (17) comporte une première saillie (20) débordant en direction radiale, contre laquelle la bague interne (16) peut être soutenue dans une première direction (M) axiale.

4. Arbre articulé (1) selon la revendication 3, **caractérisé en ce que**
sur une deuxième extrémité (21) axiale, la bague de serrage (17) comporte une deuxième saillie (22) débordant en direction radiale, contre laquelle la bague interne (16) peut être soutenue dans une deuxième direction (D) axiale.

5. Arbre articulé (1) selon la revendication 4, **caractérisé en ce que**
le deuxième saillie (22) est placée sur une patte (23) de la bague de serrage (17), résiliente en direction radiale.

6. Arbre articulé (1) selon l'une quelconque des revendications 1 à 5,
**caractérisé en ce que**
la bague de serrage (17) est conçue en étant divisée sur la circonférence.

7. Arbre articulé (1) selon l'une quelconque des revendications 1 à 6,
**caractérisé en ce que**
la bague de serrage (17) comporte deux parties (24, 25) de bague de serrage, qui sont insérées à partir de côtés opposés dans la bague interne (16),
**en ce que** considérées chacune dans une coupe longitudinale en rapport à l'axe de rotation (L), les parties (24, 25) de bague de serrage comportent au moins un segment cunéiforme (27, 28), qui se rétrécit dans la direction de la partie (24, 25) de bague de serrage opposée, et
**en ce que** les deux parties (24, 25) de bague de serrage sont emboîtées l'une dans l'autre de telle sorte que les segments cunéiformes (27, 28) des deux parties (24, 25) de bague de serrage soit placés en se chevauchant.

8. Arbre articulé (1) selon la revendication 7, **caractérisé en ce que**
les segments cunéiformes des parties (24, 25) de bague de serrage sont formés par des pattes (27, 28), qui débordent en direction axiale à partir d'une bague de base (30, 31), dans la direction de la partie (24, 25) de bague de serrage opposée.

9. Arbre articulé (1) selon la revendication 1, **caractérisé en ce que**
la bague de serrage (17) est formée par enrobage par injection de la bague interne (16).
